# EUROPEAN PATENT SPECIFICATION

(11) **EP 3 170 705 B1**
(45) Date of publication and mention of the grant of the patent: **31.10.2018**
(21) Application number: 16198087.5
(22) Date of filing: 10.11.2016
(51) Int. Cl.: B60R 25/045, B60W 50/14, B60R 25/24

(54) **SELECTIVE SIGNALLING METHOD FOR A STARTER SYSTEM OF AN ENGINE OF A VEHICLE**
SELEKTIVES SIGNALISIERUNGSVERFAHREN FÜR EIN ANLASSERSYSTEM EINES MOTORS EINES FAHRZEUGS
PROCÉDÉ D'AVERTISSEMENT SÉLECTIF POUR UN SYSTÈME DE DÉMARRAGE D'UN MOTEUR DE VÉHICULE

(30) Priority: 10.11.2015 ES 201531617
(43) Date of publication of application: 24.05.2017
(73) Proprietor: Seat, S.A., 08760 Martorell - Barcelona (ES)
(72) Inventor: ROS BONANAD, Eden, 08760 MARTORELL (Barcelona) (ES); CUEVAS MERCADAL, Javier, 08760 MARTORELL (Barcelona) (ES)
(74) Representative: Ponti & Partners, S.L.P

(56) References cited:
- US-A1- 2014 081 561
- US-B2- 8 111 145

## Description

The present invention relates to a selective signalling method for a starter system of an engine of a vehicle that clearly indicates to the driver whether or not they have to actuate an actuator to start or stop the engine.

### Background to the invention

Modern vehicles may include a new user function based on keyless ignition. This function enables users to activate the vehicle electronics or the vehicle drive system without having to insert the key in the cylinder provided on the instrument panel.

With this new function, ignition relies on a sensor in the vehicle that detects the proximity of the key to the driving zone within the passenger compartment. This detection enables the vehicle to determine whether an authorized driver is in the driving position and to authorize ignition of the vehicle. The vehicle electronics are activated by pressing a start button. Pressing this start button simultaneously with the clutch pedal (in a vehicle with a manual gearbox) or with the brake pedal (in a vehicle with an automatic gearbox) starts the drive system of the vehicle.

It is also increasingly common for vehicles to include "Start & Stop" systems (which help to reduce consumption by stopping the engine when the vehicle is stopped, such as at traffic lights or in traffic jams), which results in a wide variety of circumstances in which the engine is activated but is not performing any combustion ("resting" state).

Furthermore, there are situations when the engine is deactivated deliberately if the safe driving of the vehicle cannot be guaranteed. This wide variety of situations can cause uncertainty for the driver of the vehicle, causing the driver to become confused and not to know whether the vehicle is in the resting state or whether they have stalled the engine and need to press the start button to start it.

It is known to use a light surrounding the start button that is illuminated on a time-delay only while the user is entering the vehicle in order to draw the driver's attention, and the time-delay on the light surrounding the start button can be used to indicate the need to press the button to start the vehicle. Once the engine has been started for the first time, the light provides no more information to the user.

US8111145 discloses the use of a single-button to coordinate ignition and the starting system for a vehicle. This document describes the use of different colours to indicate the state of the vehicle to the user and to help the user not to make mistakes, such as pressing the start button a second time when the button is already on. This system uses a complex logic in which each colour indicates a different action to be performed by the driver. The association of each of the colours to the action to be performed is not intuitive, adding numerous variables and complications for the user. This is not an obvious solution for the user since it also does not include all of the possible circumstances.

Consequently, the present invention is intended to add value to the start button of a vehicle, enabling the user to determine the state of the vehicle by simply looking at said start button.

### Description of the invention

The signalling method according to the invention addresses the drawbacks cited and offers other advantages, as described below.

The present invention proposes a selective signalling method for a starter system of an engine of a vehicle, in which the vehicle has at least one indicator lamp associated with a first starter actuator of the vehicle, including the following steps:
- determining the state of the engine,
- determining the presence of a driver in the vehicle,
- illuminating the at least one indicator lamp as a function of the determined state of the engine and the determined presence of the driver in the vehicle, such that:
   if the determined state of the engine is off, the at least one indicator lamp is illuminated according to a first signalling mode,
   if the determined state of the engine is resting and the determined presence of the driver in the vehicle is negative, the at least one indicator lamp is illuminated according to the first signalling mode, and
   if the determined state of the engine is resting and the determined presence of the driver in the vehicle is positive, the at least one indicator lamp is illuminated according to a second signalling mode.

Accordingly, the present invention is intended to clearly and unequivocally inform the driver of the vehicle of the state of the engine of a vehicle using just two different signalling modes of the indicator lamp. As such, the objective is to minimise the information sent to the driver, informing the driver only of the instances in which the engine needs to be started manually in order to activate engine drive and of the instances in which the engine is resting and as such does not need to be restarted manually.

If the engine is running and performing combustion, this is not a relevant state for the present selective signalling method for a starter system of an engine of a vehicle. In this state, the user need not start said engine and is aware at all times that the drive system is running. In this case and according to a preferred embodiment, when the state of the engine is running, the indicator lamp is illuminated according to the second signalling mode.

According to a preferred embodiment, the first signalling mode of the at least one indicator lamp is a flashing light and the second signalling mode of the at least one indicator lamp is a continuous light. Consequently, in circumstances where the user is required to start the engine manually in order to activate engine drive, the indicator lamp activates the first signalling mode based on a flashing light. A flashing light draws the attention of the user and consequently the driver quickly understands that the start button needs to be pressed to activate the drive system of the vehicle. Conversely, when the engine is resting, and as such the engine does not need to be restarted manually, the indicator lamp activates the second signalling mode based on a continuous light. A continuous light does not draw the attention of the driver, on account of which the user understands that no action is required given that the drive system is already activated and operating correctly.

Alternatively, in the second signalling mode, the at least one indicator lamp is a deactivated light.

Advantageously, the present invention is intended to address the circumstances that lead to the most important driver errors relating to the state of the drive system. Thus, the resting engine state is, for example, a state in which the Start & Stop system is active. Consequently, the engine is not performing any combustion, but all of the engine electronics are working. When the clutch pedal is pressed or when the brake pedal is released (depending on the type of gearbox in the vehicle), the engine restarts combustion. In these cases, the start button need not be pressed. Nonetheless, for safety reasons, there are circumstances in which it is necessary to turn off the engine of a vehicle, for example if the determined presence of the driver is deemed to be negative. Both states (resting and off) appear identical to the driver, since there is no combustion in the engine. Nonetheless, the actions required of the driver wishing to drive the vehicle are completely opposite.

An example of this would be if the vehicle is stopped deliberately by the driver. Since the speed of the vehicle is zero and a series of requirements that are not relevant to the present invention have been fulfilled, the Start & Stop system is activated, the state of the engine switches to resting and combustion in the engine ceases, although the engine electronics remain activated. In this case, the user need only press the clutch pedal or release the brake pedal (depending on the type of gearbox in the vehicle) to restart combustion in the engine. Conversely, if the presence of the driver is deemed to be negative during this resting state of the vehicle, the state of the engine switches from resting to off. In this case, the user is required to press the indicator lamp and to simultaneously press the clutch pedal or release the brake pedal (depending on the type of gearbox in the vehicle) to restart combustion in the engine. It is therefore important to inform the driver of these cases, since the feedback received by the driver from the vehicle without the selective signalling method according to the present invention is the same for the different states of the engine (resting or off).

Preferably, the at least one indicator lamp is illuminated and/or deactivated as a function of the illumination and/or deactivation of a plurality of indicators on an instrument panel of the vehicle. For example, when the internal light of the vehicle is turned on, the indicator lamp is also illuminated. Equally, when the internal light of the vehicle is turned off, the indicator lamp is turned off. As such, the operating logic of the indicator lamp is linked to the existing logic of the plurality of indicators on an instrument panel. More specifically, the initial activation of the indicator lamp is linked to the initial activation of the courtesy light of the vehicle, once the user has unlock the doors of the vehicle, and the deactivation of the indicator lamp is linked to the deactivation of the courtesy light of the vehicle once the user has locked the doors of the vehicle.

Furthermore, a light intensity of the first signalling mode of the at least one indicator lamp is advantageously greater than a light intensity of the second signalling mode of the at least one indicator lamp, and the light intensity of the second signalling mode of the at least one indicator lamp is substantially equal to the plurality of indicators on the instrument panel of the vehicle. This serves to emphasise the warning to the driver of the vehicle and to better draw their attention by illuminating the indicator lamp by using the first mode, compared to the second mode.

Additionally, this intensity can be adjusted by the corresponding controls, which are pre-set as standard or independent and adjusted by the user using the *"infotainment"* screen or dedicated actuators.

Preferably, in the signalling method according to the present invention, in a state prior to the state in which the engine is resting and the presence of the driver in the vehicle is negative, if the determined presence of the driver in the vehicle changes to positive or the first starter actuator of the vehicle is actuated, the at least one indicator lamp is illuminated according to the second signalling mode.

In this manner, for example, if the detection of the driver switches from negative to positive, normal driving conditions are re-established. The vehicle is no longer detecting an unsafe driving state, on account of which the vehicle returns to a normal activated start/stop state. The illumination of the indicator lamp consequently switches from a first signalling mode to a second signalling mode.

Equally, if the user deliberately presses the start button of the engine, the engine starts and the illumination switches to continuous. In this case, the driver accepts unsafe driving conditions, in which case they deliberately turn on the engine of the vehicle. The illumination of the indicator lamp consequently switches from a first signalling mode to a second signalling mode.

According to a preferred embodiment, determining that the presence of the driver in the vehicle is negative involves determining that the driver's door of the vehicle is open and/or the driver's seat belt is unbuckled. Although these signals are the most important, given that they most clearly demonstrate the intention of the user to leave the vehicle, a sensor in the seat of the vehicle or volumetric camera that detects a presence inside the vehicle may be used as an alternative, inter alia. Cases where the seatbelt is unbuckled or the door is open are examples of unsafe driving in which the vehicle will not deliberately start the engine without an express order from the driver of said vehicle.

Conversely, determining that the presence of the driver in the vehicle is positive involves determining that the driver's door of the vehicle is closed and/or the driver's seat belt is buckled, although sensors or cameras may also be used as indicated above.

According to an additional embodiment, the vehicle may also have an additional indicator lamp associated with a second starter actuator of the vehicle, such that the signalling method includes an additional step of illuminating the additional indicator lamp according to a third illumination mode if the determined state of the engine is off or if the determined state of the engine is resting and the determined presence of the driver in the vehicle is negative.

In this case, there will not be just one illuminated element, but for example the clutch pedal will also be illuminated to indicate to the user that they have two press the pedal to start the vehicle. The intention here is to sequentially inform the driver of the vehicle by indicating the sequence of actuators that they are required to press step-by-step to start the engine of the vehicle.

According to this additional embodiment, the step of illuminating the at least one indicator lamp according to a first signalling mode is started when the second starter actuator of the vehicle is actuated. As such, each step to be performed by the user to start the engine is indicated, for example: firstly the light on the clutch is illuminated, the user actuates the clutch, and, once they have pressed the clutch, the indicator lamp is illuminated to indicate that they are required to press the start button. Advantageously, before actuating the second actuator of the vehicle, the at least one indicator lamp is illuminated according to a second signalling mode.

Furthermore, the signalling method may also include a step of deactivating the additional indicator lamp when the second starter actuator of the vehicle is actuated.

According to a preferred embodiment, the third signalling mode of the additional indicator lamp is a flashing mode, the first starter actuator of the vehicle is a keyless start switch for the engine and the second starter actuator of the vehicle is a clutch pedal.

The present invention is intended to add value to the start button of a vehicle by using same to show the state of the engine to the driver. Furthermore, it is designed to show the driver only the information that is actually important:
- That he/she needs to press the start button to start the engine (first signalling mode or flashing light), or
- That he/she should not press the start button since the engine is already running (second signalling mode or continuous light).

### Brief description of the drawings

The attached schematic drawings show a practical embodiment and are provided by way of nonlimiting example to aid comprehension of the foregoing.
Figure 1 is a block diagram of the components of the vehicle involved in the method according to the present invention, and
Figure 2 is a flow diagram of the method according to the present invention.

### Description of the preferred embodiment

Before providing a detailed description of the method according to the present invention, it is important to define the meaning of engine resting, engine off and engine stalled.
- Engine resting: In this state, the vehicle keeps the engine electronics on, but turns off the combustion system of the engine. This is achieved using the "Start & Stop" system when the vehicle is stopped at traffic lights, in a traffic jam, etc.
- Engine off: The engine is deemed to be off if the engine is not performing any combustion and the engine electronics are not on. This state occurs if the user deliberately presses the starter actuator when the engine is running or resting. Furthermore, there are circumstances in which the engine is turned off for safety reasons. For example, a vehicle enters resting mode and the driver opens the door or unbuckles the seatbelt. In such cases, for safety reasons, the vehicle turns off the engine completely and requests that the engine be restarted (by pressing the start button again).
- Engine stalled: The engine is deemed to have stalled if the engine turns off suddenly as a result of a fault in the engine or driver error, for example if the user fails to press the clutch pedal when the vehicle has stopped with the gearbox engaged. Henceforth and for the purposes of the present description, the description of the engine as off shall also encompass the engine having stalled, since both cases require the actuator to be pressed again to start the engine.

In addition to this, there is a state in which the engine 3 is running, in which the electronics in the engine 3 are on and the combustion system is running. This method does not apply exclusively to combustion engines, and may be used in an equivalent manner in hybrid or electric propulsion systems, or in other alternative propulsion methods.

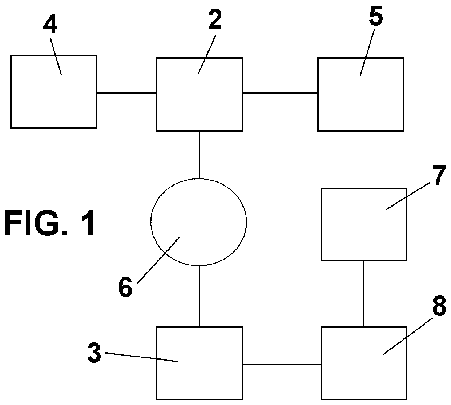

As shown in Figure 1, the components of the vehicle involved in the method according to the present invention are as follows:
- Starter actuator 6, which is preferably the conventional start button of the vehicle, which is actuated to start and stop the engine 3 of the vehicle.
- Indicator lamp 2 that is associated with said starter actuator 6 and that is illuminated according to two signalling modes, as detailed below. This indicator lamp 2 is preferably arranged about the actuator 6, although it may be positioned anywhere suitable where the driver can see it easily.
- Occupation sensor or sensors 4, which determine the presence of the driver. Said sensor or sensors may be an opening sensor of the driver's door, a safety belt engagement sensor, a driver's seat presence sensor or a camera, inter alia.
- Indicators 5 on the instrument panel of the vehicle, for example buttons or actuators located on the instrument panel or dashboard of the vehicle, such as air-conditioning indicators, airbag switches, indicator switches, etc.
- Second starter actuator 8 which may be, for example, the clutch pedal or the brake pedal of the vehicle, actuation of which may optionally be required to start the engine 3.
- Additional indicator lamp 7 that is associated with the second starter actuator 8 and intended to indicate the need to actuate said second actuator 8.

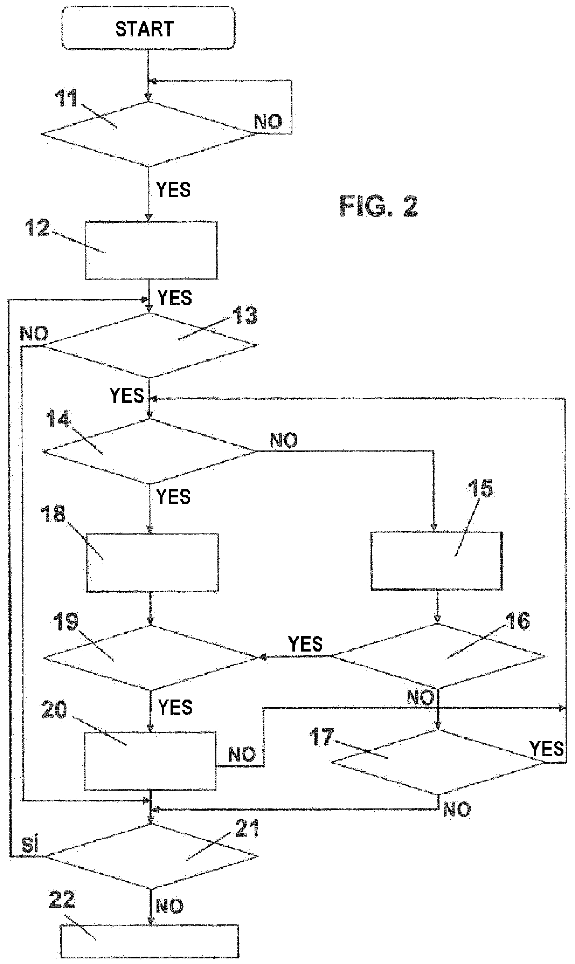

The signalling method according to the present invention is described below with reference to Figure 2:
Firstly (block 11), the doors of the vehicle are checked to determine whether they have been unlocked. Said check involves determining whether the user has opened the vehicle (unlocked the doors) using the remote control or whether the user has opened the door manually by inserting the key into the cylinder of the door to unlock the doors. In this situation, after the doors have been unlocked, the vehicle activates or turns on some of the internal lighting of the vehicle.

Consequently, as with some of the internal lighting of the vehicle, when said door-unlocking is detected, the present method activates the first signalling mode (block 12) of the indicator lamp 2, for example a flashing light.

Block 13 determines when the engine 3 is started. In an initial state, the engine 3 is off and the indicator lamp 2 is illuminated according to a first illumination mode. Subsequently, the user can start the engine 3 by pressing the start button (actuator) 6 while simultaneously pressing the clutch (vehicle with manual gearbox) or releasing the brake pedal (vehicle with automatic gearbox), if it is necessary to actuate the second actuator 8. This switches the state of the engine 3 to running and the indicator lamp 2 is illuminated according to a second illumination mode. Alternatively, the driver can choose not to press any pedal and only to press the start button 6 so as to only activate the electronics of the vehicle without starting the engine 3. In this second case, since the engine is not running, the indicator lamp 2 is illuminated according to a first illumination mode.

Block 14 determines whether the engine is in a resting state due to activation of the "Start & Stop" system. Furthermore, said block 14 determines compliance with the activation conditions for the Start & Stop system. If the response to block 14 is Yes, the indicator lamp 2 is in the second signalling mode (block 18). In this manner, the engine 3 will be in the resting state and the activation conditions for the Start & Stop system are satisfied, on account of which there is no need to press the start button 6 to start the engine 3. Conversely, if the response to block 14 is No, the engine 3 will be in the resting state but the Start & Stop conditions are not satisfied, and the indicator lamp 2 is illuminated according to the first signalling mode. In this second case in block 14, while the engine 3 was in a resting state, some of the conditions impeding operation of the "Start & Stop" system occurred, causing the engine 3 to switch automatically to a stopped state. To restart the engine 3, the user is required to restart the engine manually, on account of which they are required to press the start button 6 again and press the clutch pedal or release the brake pedal, as applicable.

The reasons for which operation of the "Start & Stop" system may be interrupted are as follows:
With the engine 3 in resting state, the driver unbuckles the seatbelt, which is detected by the sensor 4. In this case, the engine 3 enters stalled state. At this point, if the driver wishes to restart the engine 3 without the seat belt being engaged in the buckle, the driver is required to press the start button 6 again. This is done for safety reasons, since there are very few circumstances in which the user can drive without a seatbelt. When the engine 3 is stopped, the indicator lamp 2 is in the first signalling mode.

When the seat belt is buckled up again, and if the other conditions required for the engine 3 to be in the resting state are satisfied, the indicator lamp 2 will be in the second signalling mode (continuous light).

If the user deliberately presses the starter actuator 6, the state of the engine 3 switches from resting to off (as a result of non-fulfilment of the Start & Stop conditions), then to running (as a result of the starter actuator 6 being pressed manually). In parallel, the indicator lamp 2 switches from the second signalling mode to the first signalling mode, then back to the second signalling mode once the user has pressed the starter actuator 6.

Similarly, when the engine 3 is resting, if the driver opens the door, which is detected by the sensor 4, the state of the engine 3 switches to off. The indicator lamp 2 is then in the first signalling mode. When the door is closed again, if the conditions for the engine 3 to be in the resting state are satisfied, the indicator lamp 2 will be in the second signalling mode.

If the vehicle stalls with the gearbox engaged, the engine turns off and the indicator lamp 2 switches to the first signalling mode, informing the user that the engine needs to be restarted.

Consequently, if the response in block 14 is No, the engine 3 is in resting mode and the resting-mode conditions are not fulfilled for any of the reasons stated, then the indicator lamp 2 automatically switches to the first signalling mode (block 15). However, if the user re-establishes all of the resting-mode conditions for the engine (block 16), for example by buckling their seatbelt having previously unbuckled it, the indicator lamp 2 switches back to the second signalling mode.

As mentioned above, even if the user does not satisfy all of the conditions, such as by not wearing a seatbelt, the user may nonetheless decide to start the engine 3 of the vehicle. To do so, the user may again press the start button 6 (block 17) to restart the engine 3, the driver then being responsible for the reduced-safety conditions.

Block 19 determines whether the driver has deliberately stopped the engine 3. If so, the indicator lamp 2 is in the first signalling mode (block 20), otherwise the method is repeated from block 14.

Block 21 determines whether the internal lighting of the vehicle is on. The indicator lamp 2 remains in the first signalling mode according to the same parameters as the general internal lighting of the vehicle. This means that, after a certain waiting period or period of inactivity without the user pressing or actuating any buttons, the lighting system inside the vehicle commands the light emitters, including the indicator lamp 2, to turn off, thereby improving consumption from the battery (block 22).

Although reference has been made to a specific embodiment of the invention, it is obvious for a person skilled in the art that numerous variations and modifications may be made to the signalling method described, and that all of the details mentioned may be replaced by other technically equivalent details without thereby moving outside the scope of protection defined by the attached claims.

## Claims

1. Selective signalling method for a starter system of an engine (3) of a vehicle, in which the vehicle has at least one indicator lamp (2) associated with a first starter actuator of the vehicle (6), **characterised in that** it includes the following steps:
- determining the state of the engine (3),
- determining the presence of a driver in the vehicle,
- illuminating the at least one indicator lamp (2) as a function of the determined state of the engine (3) and the determined presence of the driver in the vehicle, such that:
if the determined state of the engine (3) is off, the at least one indicator lamp (2) is illuminated according to a first signalling mode, the method being **characterised in that** if the determined state of the engine (3) is resting and the determined presence of the driver in the vehicle is negative, the at least one indicator lamp (2) is illuminated according to the first signalling mode, and
if the determined state of the engine (3) is resting and the determined presence of the driver in the vehicle is positive, the at least one indicator lamp (2) is illuminated according to a second signalling mode.

2. Selective signalling method for a starter system of an engine (3) of a vehicle according to claim 1, **characterised in that** the first signalling mode of the at least one indicator lamp (2) is a flashing light.

3. Selective signalling method for a starter system of an engine (3) of a vehicle according to claim 1, **characterised in that** the second signalling mode of the at least one indicator lamp (2) is a continuous light.

4. Selective signalling method for a starter system of an engine (3) of a vehicle according to claim 1, **characterised in that** the at least one indicator lamp (2) is illuminated and/or deactivated as a function of the illumination and/or deactivation of a plurality of indicators (5) on an instrument panel of the vehicle.

5. Selective signalling method for a starter system of an engine (3) of a vehicle according to claims 2 and 3, **characterised in that** a light intensity of the first signalling mode of the at least one indicator lamp (2) is greater than a light intensity of the second signalling mode of the at least one indicator lamp (2).

6. Selective signalling method for a starter system of an engine (3) of a vehicle according to claims 2, 4 and 5, **characterised in that** the light intensity of the second signalling mode of the at least one indicator lamp (2) is substantially equal to the plurality of indicators (5) on the instrument panel of the vehicle.

7. Selective signalling method for a starter system of an engine (3) of a vehicle according to claim 1, **characterised in that** in a state prior to the state in which the engine (3) is resting and the presence of the driver in the vehicle is negative, if the determined presence of the driver in the vehicle changes to positive or the first starter actuator of the vehicle (6) is actuated, the at least one indicator lamp (2) is illuminated according to the second signalling mode.

8. Selective signalling method for a starter system of an engine (3) of a vehicle according to claim 1, **characterised in that** determining that the presence of the driver in the vehicle is negative involves determining that the driver's door of the vehicle is open and/or the driver's seat belt is unbuckled.

9. Selective signalling method for a starter system of an engine (3) of a vehicle according to claim 1, **characterised in that** determining that the presence of the driver in the vehicle is positive involves determining that the driver's door of the vehicle is closed and/or the driver's seat belt is buckled.

10. Selective signalling method for a starter system of an engine (3) of a vehicle according to claim 1, **characterised in that** the vehicle has an additional indicator lamp (7) associated with a second starter actuator (8) of the vehicle, such that the signalling method includes an additional step of illuminating the additional indicator lamp (7) according to a third illumination mode if the determined state of the engine (3) is off or if the determined state of the engine (3) is resting and the determined presence of the driver in the vehicle is negative.

11. Selective signalling method for a starter system of an engine (3) of a vehicle according to claims 1 and 10, **characterised in that** the step of illuminating the at least one indicator lamp (2) according to a first signalling mode is started when the second starter actuator (8) of the vehicle is actuated.

12. Selective signalling method for a starter system of an engine (3) of a vehicle according to claim 10, **characterised in that** the signalling method may also include a step of deactivating the additional indicator lamp (7) when the second starter actuator (8) of the vehicle is actuated.

13. Selective signalling method for a starter system of an engine (3) of a vehicle according to claim 10, **characterised in that** the third signalling mode of the additional indicator lamp (7) is a flashing light.

14. Selective signalling method for a starter system of an engine (3) of a vehicle according to claim 1, **characterised in that** the first starter actuator of the vehicle (6) is a keyless start switch for the engine.

15. Selective signalling method for a starter system of an engine (3) of a vehicle according to claim 10, **characterised in that** the second starter actuator (8) of the vehicle is a clutch pedal.

## Patentansprüche

1. Selektives Signalisierungsverfahren für eine Anlasseranlage eines Motors (3) eines Fahrzeugs, wobei das Fahrzeug wenigstens eine Anzeigelampe (2), die mit einem ersten Anlasserbetätigungselement des Fahrzeugs (6) verknüpft ist, aufweist, **dadurch gekennzeichnet, dass** es die folgenden Schritte einschließt:
- Feststellen des Zustandes des Motors (3),
- Feststellen der Anwesenheit eines Fahrers im Fahrzeug,
- Erleuchten der wenigstens einen Anzeigelampe (2) in Abhängigkeit von dem festgestellten Zustand des Motors (3) und der festgestellten Anwesenheit des Fahrers im Fahrzeug, so dass:
falls der festgestellte Zustand des Motors (3) ausgeschaltet ist, die wenigstens eine Anzeigelampe (2) entsprechend einem ersten Signalisierungsmodus erleuchtet wird,
wobei das Verfahren **dadurch gekennzeichnet ist, dass**,
falls der festgestellte Zustand des Motors (3) pausierend ist und die festgestellte Anwesenheit des Fahrers im Fahrzeug negativ ist, die wenigstens eine Anzeigelampe (2) entsprechend dem ersten Signalisierungsmodus erleuchtet wird und,
falls der festgestellte Zustand des Motors (3) pausierend ist und die festgestellte Anwesenheit des Fahrers im Fahrzeug positiv ist, die wenigstens eine Anzeigelampe (2) entsprechend einem zweiten Signalisierungsmodus erleuchtet wird.

2. Selektives Signalisierungsverfahren für eine Anlasseranlage eines Motors (3) eines Fahrzeugs nach Anspruch 1, **dadurch gekennzeichnet, dass** der erste Signalisierungsmodus der wenigstens einen Anzeigelampe (2) ein blinkendes Licht ist.

3. Selektives Signalisierungsverfahren für eine Anlasseranlage eines Motors (3) eines Fahrzeugs nach Anspruch 1, **dadurch gekennzeichnet, dass** der zweite Signalisierungsmodus der wenigstens einen Anzeigelampe (2) ein ununterbrochenes Licht ist.

4. Selektives Signalisierungsverfahren für eine Anlasseranlage eines Motors (3) eines Fahrzeugs nach Anspruch 1, **dadurch gekennzeichnet, dass** die wenigstens eine Anzeigelampe (2) in Abhängigkeit von dem Erleuchten und/oder Deaktivieren einer Vielzahl von Anzeigen (5) auf einer Instrumententafel des Fahrzeugs erleuchtet und/oder deaktiviert wird.

5. Selektives Signalisierungsverfahren für eine Anlasseranlage eines Motors (3) eines Fahrzeugs nach Anspruch 2 und 3, **dadurch gekennzeichnet, dass** eine Lichtintensität des ersten Signalisierungsmodus der wenigstens einen Anzeigelampe (2) größer ist als eine Lichtintensität des zweiten Signalisierungsmodus der wenigstens einen Anzeigelampe (2).

6. Selektives Signalisierungsverfahren für eine Anlasseranlage eines Motors (3) eines Fahrzeugs nach Anspruch 2, 4 und 5, **dadurch gekennzeichnet, dass** die Lichtintensität des zweiten Signalisierungsmodus der wenigstens einen Anzeigelampe (2) im Wesentlichen gleich der Vielzahl von Anzeigen (5) auf der Instrumententafel des Fahrzeugs ist.

7. Selektives Signalisierungsverfahren für eine Anlasseranlage eines Motors (3) eines Fahrzeugs nach Anspruch 1, **dadurch gekennzeichnet, dass** in einem Zustand vor dem Zustand, in dem der Motor (3) pausiert und die Anwesenheit des Fahrers im Fahrzeug negativ ist, falls die festgestellte Anwesenheit des Fahrers im Fahrzeug zu positiv wechselt oder das erste Anlasserbetätigungselement des Fahrzeugs (6) betätigt wird, die wenigstens eine Anzeigelampe (2) entsprechend dem zweiten Signalisierungsmodus erleuchtet wird.

8. Selektives Signalisierungsverfahren für eine Anlasseranlage eines Motors (3) eines Fahrzeugs nach Anspruch 1, **dadurch gekennzeichnet, dass** das Feststellen, dass die Anwesenheit des Fahrers im Fahrzeug negativ ist, einschließt, dass die Fahrertür des Fahrzeugs offen ist und/oder der Gurt des Fahrersitzes abgeschnallt ist.

9. Selektives Signalisierungsverfahren für eine Anlasseranlage eines Motors (3) eines Fahrzeugs nach Anspruch 1, **dadurch gekennzeichnet, dass** das Feststellen, dass die Anwesenheit des Fahrers im Fahrzeug positiv ist, einschließt, dass die Fahrertür des Fahrzeugs geschlossen ist und/oder der Gurt des Fahrersitzes angeschnallt ist.

10. Selektives Signalisierungsverfahren für eine Anlasseranlage eines Motors (3) eines Fahrzeugs nach Anspruch 1, **dadurch gekennzeichnet, dass** das Fahrzeug eine zusätzliche Anzeigelampe (7) aufweist, die mit einem zweiten Anlasserbetätigungselement (8) des Fahrzeugs verknüpft ist, so dass das Signalisierungsverfahren einen zusätzlichen Schritt des Erleuchtens der zusätzlichen Anzeigelampe (7) entsprechend einem dritten Erleuchtungsmodus, falls der festgestellte Zustand des Motors (3) ausgeschaltet ist oder falls der festgestellte Zustand des Motors (3) pausierend ist und die festgestellte Anwesenheit des Fahrers im Fahrzeug negativ ist, einschließt.

11. Selektives Signalisierungsverfahren für eine Anlasseranlage eines Motors (3) eines Fahrzeugs nach Anspruch 1 und 10, **dadurch gekennzeichnet, dass** der Schritt des Erleuchtens der wenigstens einen Anzeigelampe (2) entsprechend einem ersten Signalisierungsmodus gestartet wird, wenn das zweite Anlasserbetätigungselement (8) des Fahrzeugs betätigt wird.

12. Selektives Signalisierungsverfahren für eine Anlasseranlage eines Motors (3) eines Fahrzeugs nach Anspruch 10, **dadurch gekennzeichnet, dass** das Signalisierungsverfahren ebenfalls einen Schritt des Deaktivierens der zusätzlichen Anzeigelampe (7), wenn das zweite Anlasserbetätigungselement (8) des Fahrzeugs betätigt wird, einschließen kann.

13. Selektives Signalisierungsverfahren für eine Anlasseranlage eines Motors (3) eines Fahrzeugs nach Anspruch 10, **dadurch gekennzeichnet, dass** der dritte Signalisierungsmodus der zusätzlichen Anzeigelampe (7) ein blinkendes Licht ist.

14. Selektives Signalisierungsverfahren für eine Anlasseranlage eines Motors (3) eines Fahrzeugs nach Anspruch 1, **dadurch gekennzeichnet, dass** das erste Anlasserbetätigungselement des Fahrzeugs (6) ein schlüsselloser Anlassschalter für den Motor ist.

15. Selektives Signalisierungsverfahren für eine Anlasseranlage eines Motors (3) eines Fahrzeugs nach Anspruch 10, **dadurch gekennzeichnet, dass** das zweite Anlasserbetätigungselement (8) des Fahrzeugs ein Kupplungspedal ist.

## Revendications

1. Procédé d'avertissement sélectif pour un système de démarreur d'un moteur (3) d'un véhicule, dans lequel le véhicule à au moins une lampe témoin (2) associée à un premier actionneur de démarreur du véhicule (6), **caractérisé en ce qu'**il comprend les étapes suivantes consistant :
- à déterminer l'état du moteur (3),
- à déterminer la présence d'un conducteur dans le véhicule,
- à éclairer la ou les lampes témoins (2) en fonction de l'état déterminé du moteur (3) et de la présence déterminée du conducteur dans le véhicule, de telle sorte que :
si l'état déterminé du moteur (3) est coupé, la ou les lampes témoins (2) soient éclairées en fonction d'un premier mode d'avertissement,
le procédé étant **caractérisé en ce que**
si l'état déterminé du moteur (3) est au repos et si la présence déterminée du conducteur dans le véhicule est négative, la ou les lampes témoins (2) sont éclairées en fonction du premier mode d'avertissement, et
si l'état déterminé du moteur (3) est au repos et si la présence déterminée du conducteur dans le véhicule est positive, la ou les lampes témoins (2) sont éclairées en fonction d'un deuxième mode d'avertissement.

2. Procédé d'avertissement sélectif pour un système de démarreur d'un moteur (3) d'un véhicule selon la revendication 1, **caractérisé en ce que** le premier mode d'avertissement de la ou des lampes témoins (2) est une lumière clignotante.

3. Procédé d'avertissement sélectif pour un système de démarreur d'un moteur (3) d'un véhicule selon la revendication 1, **caractérisé en ce que** le deuxième mode d'avertissement de la ou des lampes témoins (2) est une lumière continue.

4. Procédé d'avertissement sélectif pour un système de démarreur d'un moteur (3) d'un véhicule selon la revendication 1, **caractérisé en ce que** la ou les lampes témoins (2) sont éclairées et/ou désactivées en fonction de l'éclairage et/ou de la désactivation d'une pluralité d'indicateurs (5) sur un tableau de bord du véhicule.

5. Procédé d'avertissement sélectif pour un système de démarreur d'un moteur (3) d'un véhicule selon les revendications 2 et 3, **caractérisé en ce qu'**une intensité lumineuse du premier mode d'avertissement de la ou des lampes témoins (2) est plus importante qu'une intensité lumineuse du deuxième mode d'avertissement de la ou des lampes témoins (2).

6. Procédé d'avertissement sélectif pour un système de démarreur d'un moteur (3) d'un véhicule selon les revendications 2, 4 et 5, **caractérisé en ce que** l'intensité lumineuse du deuxième mode d'avertissement de la ou des lampes témoins (2) est sensiblement égale à celle de la pluralité d'indicateurs (5) sur le table de bord du véhicule.

7. Procédé d'avertissement sélectif pour un système de démarreur d'un moteur (3) d'un véhicule selon la revendication 1, **caractérisé en ce que**, dans un état précédent l'état dans lequel le moteur (3) est au repos et la présence du conducteur dans le véhicule est négative, si la présence déterminée du conducteur dans le véhicule passe à positive ou si le premier actionneur de démarreur du véhicule (6) est actionné, la ou les lampes témoins (2) sont éclairées en fonction du deuxième mode d'avertissement.

8. Procédé d'avertissement sélectif pour un système de démarreur d'un moteur (3) d'un véhicule selon la revendication 1, **caractérisé en ce que** la détermination que la présence du conducteur dans le véhicule est négative implique la détermination que la portière du conducteur du véhicule est ouverte et/ou que la ceinture de sécurité du conducteur est débouclée.

9. Procédé d'avertissement sélectif pour un système de démarreur d'un moteur (3) d'un véhicule selon la revendication 1, **caractérisé en ce que** la détermination que la présence du conducteur dans le véhicule est positive implique la détermination que la portière du conducteur du véhicule est fermée et/ou que la ceinture de sécurité du conducteur est bouclée.

10. Procédé d'avertissement sélectif pour un système de démarreur d'un moteur (3) d'un véhicule selon la revendication 1, **caractérisé en ce que** le véhicule comporte une lampe témoin supplémentaire (7) associée à un second actionneur de démarreur (8) du véhicule de telle sorte que le procédé d'avertissement comprenne une étape supplémentaire d'éclairage de la lampe témoin supplémentaire (7) en fonction d'un troisième mode d'éclairage si l'état déterminé du moteur (3) est coupé ou si l'état déterminé du moteur (3) est au repos et si la présence déterminée du conducteur dans le véhicule est négative.

11. Procédé d'avertissement sélectif pour un système de démarreur d'un moteur (3) d'un véhicule selon les revendications 1 et 10, **caractérisé en ce que** l'étape d'éclairage de la ou des lampes témoins (2) en fonction d'un premier mode d'avertissement est commencée lorsque le second actionneur de démarreur (8) du véhicule est actionné.

12. Procédé d'avertissement sélectif pour un système de démarreur d'un moteur (3) d'un véhicule selon la revendication 10, **caractérisé en ce que** le procédé d'avertissement peut également comprendre une étape de désactivation de la lampe témoin supplémentaire (7) lorsque le second actionneur de démarreur (8) du véhicule est actionné.

13. Procédé d'avertissement sélectif pour un système de démarreur d'un moteur (3) d'un véhicule selon la revendication 10, **caractérisé en ce que** le troisième mode d'avertissement de la lampe témoin supplémentaire (7) est une lampe clignotante.

14. Procédé d'avertissement sélectif pour un système de démarreur d'un moteur (3) d'un véhicule selon la revendication 1, **caractérisé en ce que** le premier actionneur de démarreur du véhicule (6) est un commutateur de démarrage sans clé pour le moteur.

15. Procédé d'avertissement sélectif pour un système de démarreur d'un moteur (3) d'un véhicule selon la revendication 10, **caractérisé en ce que** le second actionneur de démarreur (8) du véhicule est une pédale d'embrayage.
